# EUROPEAN PATENT APPLICATION

(11) **EP 2 048 402 A1**
(43) Date of publication of application: **15.04.2009**
(21) Application number: 08166359.3
(22) Date of filing: 10.10.2008
(51) Int. Cl.: F16D 55/22, B60T 13/22

(54) **Floating disc brake**

(30) Priority: 12.10.2007 US 998503 P; 19.09.2008 US 284292
(71) Applicant: Ausco Products, Inc., Benton Harbor, MI 49022-8787 (US)
(72) Inventor: Dennis, Brian, Kalamazoo, MI 49009 (US)
(74) Representative: Jennings, Michael John

(57) **Abstract**

A floating disc brake assembly including a housing (12), a pair of diametrically opposed cylindrical cavities (40) within the housing, and an end cover (14) positioned over the opening and having an aperture (17) therethrough. A shaft (16) with an axis of rotation (19) is positioned within the aperture with an end of the shaft positioned within the housing. The shaft includes a splined surface that mates with the splined surface on the interior of a bore of a disc shaped rotor (30) mounted on the shaft. A pair of diametrically opposed stationary liners (32) are attached to the end cover (14) and positioned between the end cover and the rotor. A piston (38) is positioned within each cylindrical cavity in the housing opposed to the stationary stators (32), and an axially slidable piston side liner (56) is positioned between the rotor and each of the pistons, with the rotor being axially slidable over the shaft and the pistons (38) being biased to cause the piston side liners to force the rotor against the stationary liners to create a braking force.

## Description

### TECHNICAL FIELD

This invention relates to a brake especially adapted for use with industrial vehicles such as slab scissors lifts and the like. More specifically, this invention relates to such a brake having a single floating rotor and diametrically opposed spring applied hydraulic release pistons.

### BACKGROUND ART

Industrial vehicles and construction equipment, such as backhoes, excavators, slab scissors lifts and the like, require braking systems that are small in size and low in weight due to design and cost constraints. These vehicles are often made as small as possible to increase maneuverability and ease of handling. Conventionally, such vehicles employ a multi-disc braking system. The multi-disc braking system has a plurality of rotating discs splined to the rotating shaft of the vehicle, and a plurality of stationary discs alternating on a common axis with the rotating discs. Both the stationary and rotating discs are slidably mounted on the shaft. Stopping forces are generated by applying pressure to the discs thereby pressing them together. The friction between the rotating and stationary discs when pressed together provide the stopping force. Conventional multi-disc braking assembly may be applied directly to the vehicles frame, and in some cases the frame serves as a part of the brake assembly housing, acting to contain elements therein, in an attempt to reduce the size and weight of the assembly.

Such multi-disc brake assemblies, while effective, are still heavier, larger and more complex than is ideal on such industrial and construction vehicles. The complexity of the system increases production and installation costs, while increasing the chances of future failures and the need for additional maintenance. Attempts to design braking systems similar to the caliper-type braking systems used on most consumer automobiles have not proved beneficial, as a significant amount of hardware has been necessary to allow the calipers to float around a rotor. Moreover, attempts at fixing the caliper and allowing the rotor to float have not proven successful because a single piston, as typically utilized, pushes one side of the rotor and
tends to cause binding on the shaft. Thus, such a caliper type braking system does not provide any real benefit or advantage over multi-disc systems because they remain large, heavy and complex.

In view of these problem, it is evident that the need exists for a braking system that is lighter, smaller and less complex than conventional multi disc brake systems, while providing substantially similar stopping power.

### SUMMARY

One aspect of the present invention provides a floating disc brake assembly that is smaller, lighter in weight, and less complex than conventional disc brakes.

Another aspect of the present invention provides a floating disc brake assembly, as above, that provides an even, reliable braking force.

These and other features and embodiments of the present invention, as well as the advantages thereof over existing prior art forms, which will become apparent from the description to follow, are accomplished by the improvements hereinafter described and claimed.

In general, a floating disc brake assembly in accordance with the present invention is designed for use on a rotating shaft having a floating disc rotor and includes a housing with an opening and a pair of cylindrical cavities therein, an end cover positioned over the opening in the housing, and a pair of stationary liners secured to an interior surface of the end cover. A spring applied hydraulic release piston is positioned within each of the cavities in the housing, and a slidable piston-side liner is positioned adjacent to each piston and spaced from the stationary stators to create a gap therebetween. The rotor is received in the gap and the piston-side liners are engaged and moved by the pistons to force the floating disc rotor against the stationary liners, thereby creating a braking force.

In accordance with another aspect of the present invention, a floating disc brake assembly includes a housing with an opening at one end and an inner cavity. A pair of diametrically opposed cylindrical cavities are also formed within the housing. An end cover is positioned over the opening and has an aperture therethrough. A shaft with an axis of rotation is disposed within the aperture with one end of the shaft positioned within the housing. The shaft includes a splined surface, and a disc shaped rotor with a central bore having a splined surface is positioned concentrically on the splined surface of the shaft. A pair of diametrically opposed stationary liners are attached to the end cover and positioned between the end cover and the rotor. A piston is disposed within each cylindrical cavity in the housing, and an axially slidable piston side liner is positioned between the rotor and each piston. The rotor is axially slidable over the shaft and the pistons are biased to cause the piston side liners to force the rotor against the stationary liners to create a braking force.

In accordance with yetanother aspect of the present invention, a brake assembly for a disc that is axially moveable on a rotating shaft includes a housing with an end cover and a pair of pistons that are normally spaced from the end cover. The disc is positioned in the space between the end cover and the pistons, and the pistons are moveable so that the disc is moved and engaged to provide a braking force to the shaft.

A preferred exemplary brake made in accordance with the present invention is shown by way of example in the accompanying drawings without attempting to show all the various forms and modifications in which the invention might be embodied, the invention being measured by the appended claims and not by the details of the specification.

### BRIEF DESCRIPTION OF THE DRAWINGS

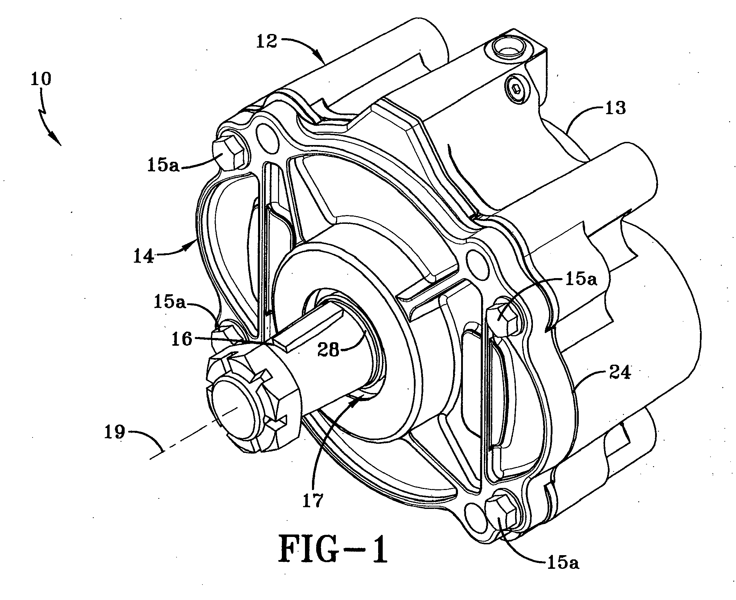

Fig. 1 is a perspective view of the brake assembly according to the concepts of the present invention.

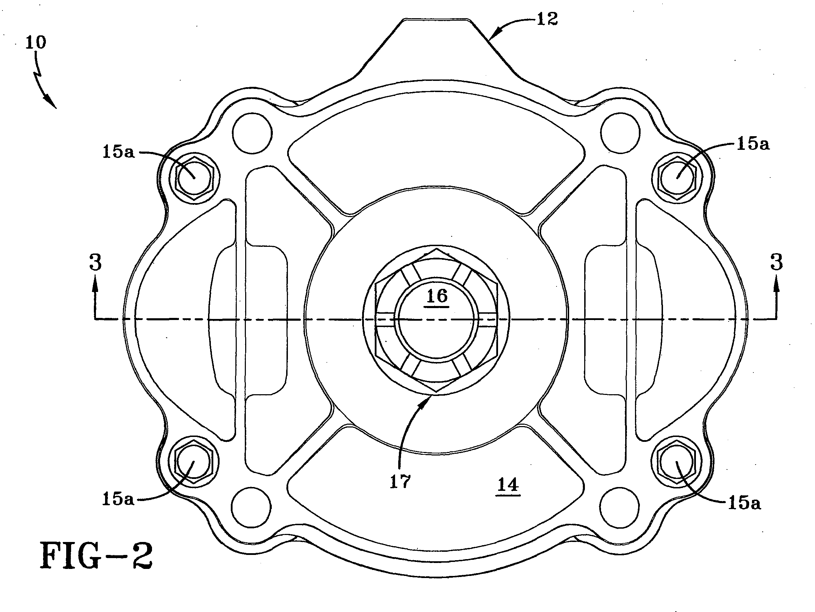

Fig. 2 is a front elevational view of the brake assembly of Fig. 1.
Fig. 3 is a sectional view of the brake assembly taken substantially across line 3-3 of Fig. 2.
Fig. 4 is an exploded perspective view of the brake assembly of Fig. 1.
Fig. 5 is another perspective exploded view of the brake assembly of Fig. 1.
Fig. 6 is an enlarged sectional view of the spring applied hydraulic release cylinder of Fig. 3 showing the nested spring.

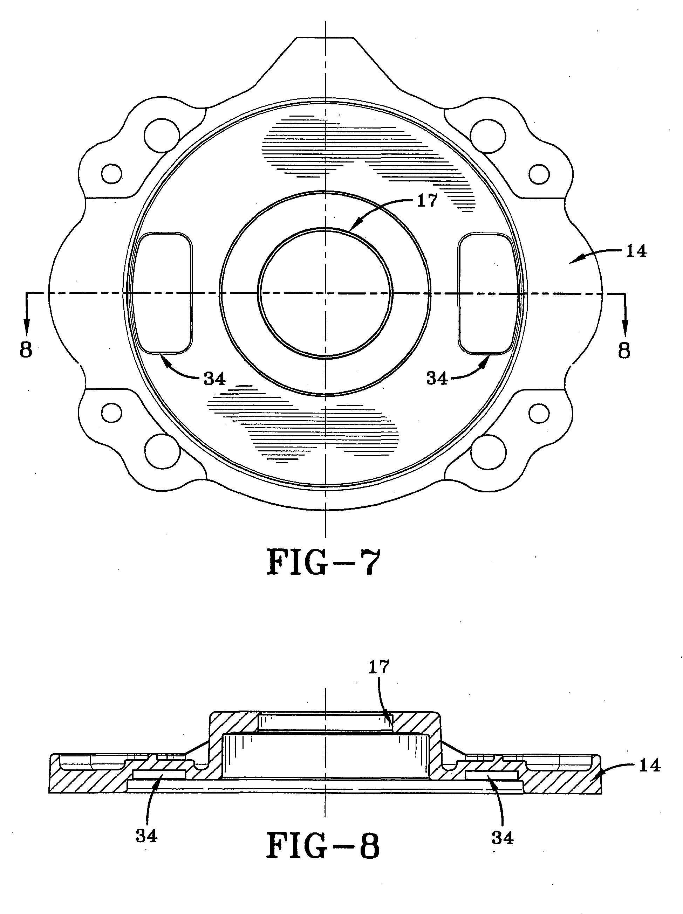

Fig. 7 is a front elevational view of the end cover of the brake assembly of claim 1.
Fig. 8 is a sectional view of the end cover taken substantially along line 8-8 of Fig. 7.

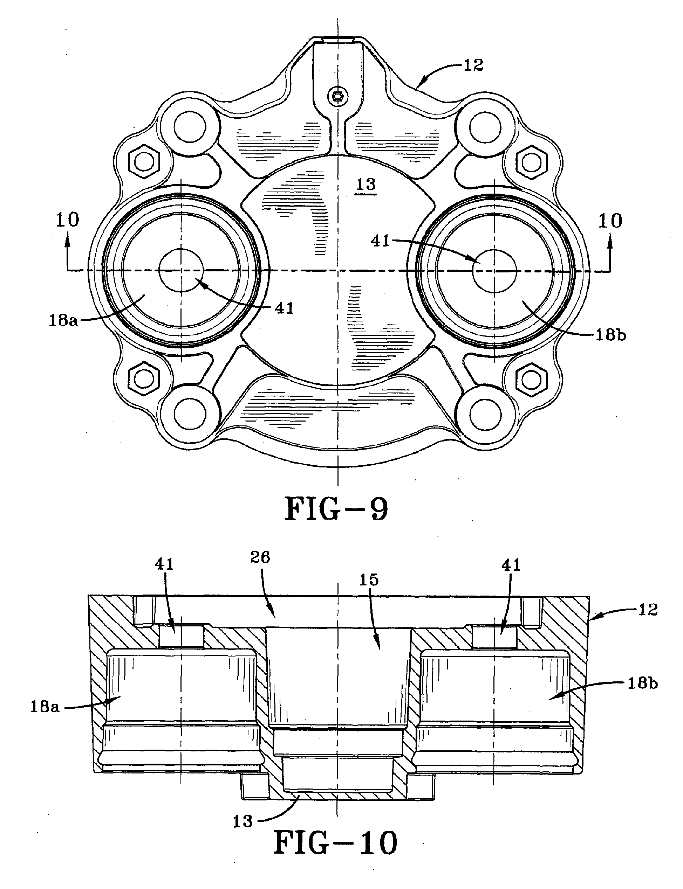

Fig. 9 is a front elevational view of the housing of the brake assembly of claim 1.
Fig. 10 is a sectional view of the housing taken substantially along line 10-10 of Fig. 9.

### PREFERRED EMBODIMENT FOR CARRYING OUT THE INVENTION

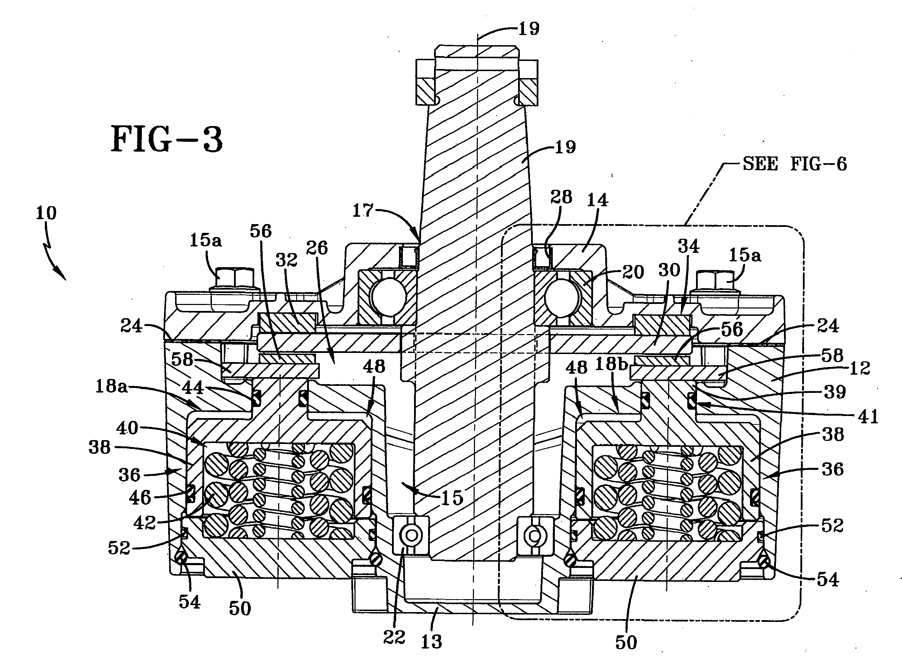

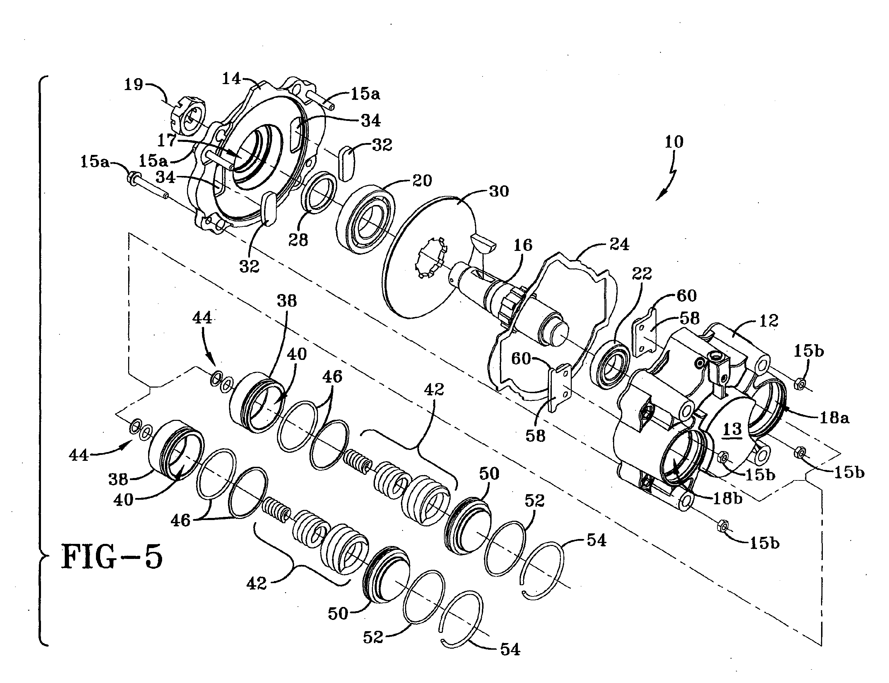

A brake made in accordance with the present invention is indicated generally by the numeral 10 in the drawings, the components of which are best shown in Figs. 3 - 6. Brake assembly 10 includes housing 12 which surrounds the brake assembly components. Housing 12 is generally cylindrical, having a back wall 13 and an open end opposite back wall 13 that is substantially closed by end cover 14. End cover 14 is secured to housing 12 by a plurality of threaded bolts 15a and internally threaded nuts 15b which pass through both end cover 14 and housing 12. The brake assembly 10 also includes a conventional shaft 16 extending through an opening 17 in end cover 14 of housing 12. A shaft recess 15 is provided in housing 12 to coaxially receive shaft 16 therein. Housing 12 is also provided with a pair of diametrically opposed cylindrical recesses 18a and 18b, each having an opening through back wall 13.

Shaft 16 has an axis of rotation 19 and is rotatably positioned within a pair of bearings 20 and 22. One shaft bearing 20 is positioned adjacent to end cover 14, while the other bearing 22 is positioned proximate to an end of shaft 16 within housing 12. An annular gasket 24 is positioned between end cover 14 and housing 12 to create a sealed inner cavity 26. The interface between the outer surface of shaft 16 and the inner surface of the opening 17 in end cover 14 may be provided with a seal 28. In the current - embodiment, bearings 20 and 22 are radial ball bearings coaxially mounted over shaft 16. The shaft, bearing and seal design and configuration may be any conventional design known to those skilled in the art, and should not act to limit the scope of the present invention.

A rotor 30 is mounted coaxially over shaft 16. Rotor 30 and shaft 16 are splined together so that rotor 30 rotates with shaft 16. Rotor 30 is adapted to float on shaft 16 such that rotor 30 may slide coaxially along shaft 16 while the splines of each remain engaged with the other. The splined portion of shaft 16 is larger in the axial direction than the width of rotor 30 to allow the rotor to move axially while remaining rotationally engaged. Rotor 30 may slide only a fraction of an inch in the axial direction on shaft 16, but must slide far enough to permit rotor 30 to rotate freely. Shaft 16 may include stops which define a first, a second, or both a first and second extreme end in the range of movement of floating rotor 30. In an alternative embodiment, rotor 30 may be biased in a rotating position by at least one spring (not shown). In the embodiment shown, rotor 30 is substantially circular in shape.

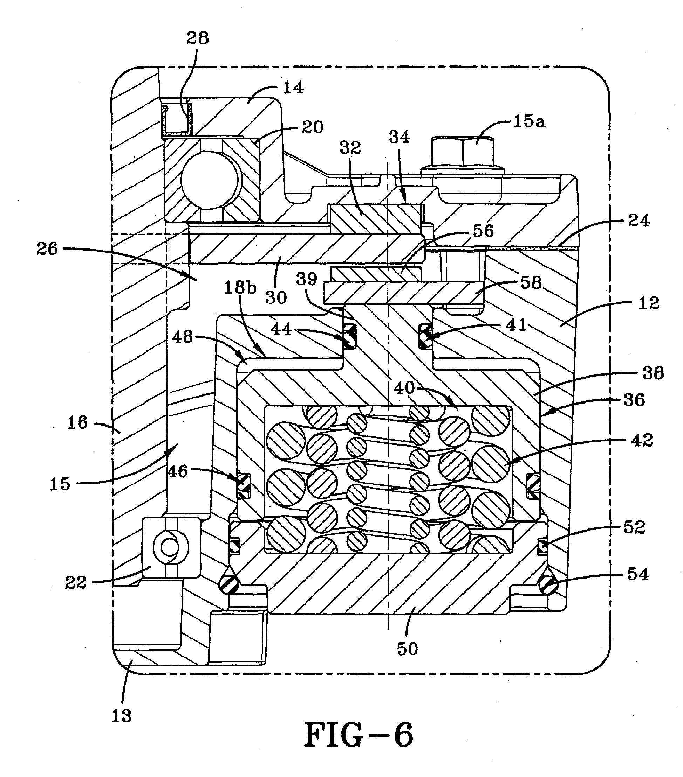

End cover 14 is equipped with two diametrically opposed stationary liners 32. As best seen in Figs. 3 and 6, stationary liners 32 are disposed within depressions 34 in end cover 14 which may be created as an integral part of end cover 14. Stationary liners 32 may be secured within depressions 34 by any conventional means known to persons skilled in the art suitable to hold liners 32 in place. In this embodiment, stationary liners 32 are secured in depressions 34 by a commercially available adhesive.

A piston mechanism, generally indicated by the numeral 36, is disposed within each cylindrical recess 18a and 18b of housing 12 and mechanisms 36 are positioned adjacent to the extreme radial edge of rotor 30. Piston mechanisms 36 are located an equal radial distance from the center point of rotor 30. As best seen in Fig. 6, each piston mechanism 36 includes a piston 38 disposed within cylindrical cavity 18a or 18b in housing 12. The extreme outside diameter of piston 38 is approximately equal to, but slightly less than the inner diameter of cylindrical cavity 18a or 18b. A neck 39 is provided on each piston 38 that extends through an aperture 41 in cylindrical cavities 18a and 18b facing rotor 30. Piston 38 is adapted to slide coaxially within the cylindrical cavity. In this embodiment, as shown in Fig. 6, piston 38 may have a piston cavity 40 disposed therein, the cavity being positioned coaxially with piston 38 and cylindrical cavity 18a or 18b.

Disposed within piston cavity 40 is a spring assembly 42 which acts to bias piston 38 in an extended position. Spring assembly 42 can consist of a single spring, or, as shown in Figs. 3, 4, 5 and 6, spring assembly 42 may be a set of two or more (in this case three) nested springs. Each piston mechanism 36 also includes sealing members 44 and 46 and a fluid cavity 48 which is adapted to be filled with a fluid so as to apply pressure to piston 38, the sealing members acting to isolate the fluid within fluid cavity 48. A first set of annular sealing members 44 are provided within an annular recess in neck 39 of piston 38, and a second set of annular sealing members 46 is provided within an annular recess in piston 38.

A removable end cap 50 is provided in each cylindrical cavity 18a and 18b to provide access to piston mechanisms 36, and is provided with an annular seal 52. End cap 50 and annular seal 52 together act to seal cylindrical cavity 18a or 18b from the exterior of housing 12. End caps 50 may be secured in cylindrical cavities 18a and 18b by retaining rings 54, or by any other conventional means known to persons skilled in the art. When installed in a vehicle, end caps 50 may be pressed slightly into cylindrical cavities 18a and 18b due to a force exerted by the vehicle frame when brake assembly 10 is secured thereto. This force acts to compress spring assembly 42 removing pressure from retaining rings 54. As will be appreciated by those skilled in the art, the force exerted by the vehicle frame and pressing on end caps 50 will also prevent retaining rings 54 from experiencing any increase in load when piston mechanisms 36 are pressurized. The use of the vehicle frame to isolate retaining rings 54 from increased loading allows for a greatly simplified housing 12 as compared with alternatives.

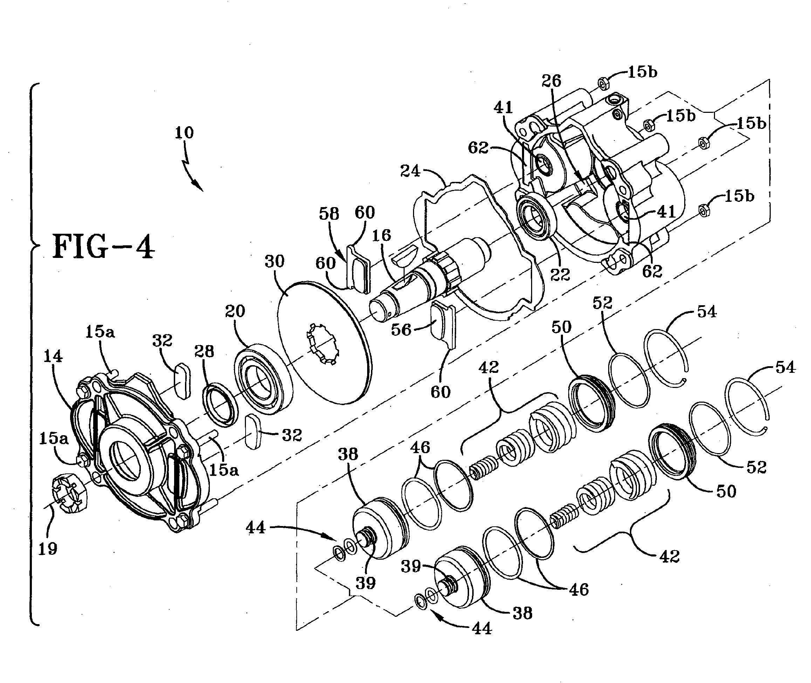

A piston side liner 56 is provided adjacent to each neck 39 of pistons 38 between the end of neck 39 and rotor 30. Each piston side liner 56 is provided with a backing plate 58 that is positioned opposite rotor 30 and has a pair of ears 60 extending therefrom. Each backing plate 58, including ears 60, is received in a depression 62 (Fig. 4) in housing 12 such that backing plate 58 and piston side liner 56 are slidable in the axial direction of shaft 16. Depression 62 and ears 60 are positioned radially outside rotor 30 so as not to interfere with axial movement of the rotor 30 and pistons 38.

When the vehicle is in operation, the rotation of shaft 16 causes the vehicle's motion through wheels and tires which are typically carried by the end of the shaft. As in substantially all conventional braking assemblies, force applied to a rotor or disc is transferred through the rotor or disc and through the shaft to stop the wheels from rotating. In the present invention rotor 30 rotates with shaft 16 due to the spline connection between them. In order to stop the vehicle, force is applied by the braking assembly to rotor 30 via stationary liners 32 and piston side liners 56, thereby stopping rotation of shaft 16 and the wheels of the vehicle.

Spring 42 of piston mechanism 36 biases the piston 38, and consequently the piston side liner 56, in an engaged position with rotor 30. The pressure applied by piston side liner 56 to rotor 30 by each of the piston mechanisms 36 causes rotor 30 to slide along shaft 16 axially toward end cover 14. When forced against end cover 14, rotor 30 becomes engaged with stationary liners 32. Thus, the spring biased pistons 38 act to press rotor 30 against stationary liners 32 with piston side liners 56. The liners act to stop rotation of rotor 30 due to friction created therebetween. The diametrically opposed piston mechanisms 36 provide equal force to each side of rotor 30, thereby preventing binding of rotor 30 on shaft 16, as would occur with a single piston mechanism. The liners may posses a high coefficient of friction so as to supply braking power substantially equivalent to multi-disc braking systems.

To disengage liners 56 from rotor 30, and allow rotor 30 to rotate freely again, a hydraulic release feature of piston mechanism 36 may be used. Fluid cavity 48 is adapted to be filled with a fluid through a fluid line (not shown) that opens into it. When force is applied external of brake assembly 10 to an input mechanism, pressure is applied to fluid in the fluid line forcing it into fluid cavity 48. The pressure will act on piston 38 to compress spring 42 and disengage liners 56 from rotor 30. Seals 44 and 46 act to prevent the pressurized fluid from escaping from fluid cavity 48.

The brake assembly 10 of the present invention is a dry, fully enclosed caliper brake, although it will be appreciated by those skilled in the art that it would be possible to adapt the present invention to be used as a wet brake simply by providing a fluid within housing 12. Due to the low speeds of industrial and construction vehicles on which the brake assembly will be installed the brake assembly 10 may be enclosed without fear of overheating, which is typically an issue in enclosed dry brake systems. The brake assembly 10 uses a floating rotor design and overcomes the problem of binding on the shaft by using two diametrically opposed fixed calipers. By using two fixed calipers which are diametrically opposed, the binding effect is overcome and a fixed caliper, floating rotor design is made possible.

In view of the foregoing, it should thus be evident that a brake as described herein accomplishes the objects of the present invention and otherwise substantially improves the art.

## Claims

1. A floating disc brake assembly for use on a rotating shaft having a floating disc rotor, the brake assembly comprising a housing having an opening, a pair of cylindrical cavities in said housing, an end cover positioned over said opening in said housing, a pair of stationary liners secured to an interior surface of said end cover, a spring applied hydraulic release piston positioned within each said cavity, a slidable piston-side liner positioned adjacent to each said piston and spaced from each said stationary stator to create a gap therebetween, the rotor being received in the gap and said piston-side liners being engaged and moved by said pistons to force the rotor against said stationary liners, thereby creating a braking force.

2. The floating disc brake assembly of claim 1, said cylindrical cavities in said housing having an opening on one end providing access to said cavities from the exterior of said housing.

3. The floating disc brake assembly of claim 2, further comprising an end cap slidably positioned within each of said cavity openings, each end cap being retained in said cavity opening by a retaining ring, wherein each said end cap is pressed into one of said cavity openings by a vehicle frame when the brake is installed, causing a reduction in forces acting on said retaining ring when the brake is pressurized.

4. The floating disc brake assembly of claim 3, said spring applied hydraulic release pistons having a generally U-shaped body that, along with said end cap, forms an inner piston cavity.

5. The floating disc brake assembly of claim 4, said inner piston cavity having at least one spring disposed therein.

6. The floating disc brake assembly of any preceding claim, said piston side liners having a backing plate with a pair of ears, and said housing including a pair of depressions shaped to slidably receive said backing plates.

7. The floating disc brake assembly of any preceding claim, each of said pistons having a neck extending through an aperture in said cylindrical cavity to engage said piston-side liners.

8. A floating disc brake assembly comprising a housing, an opening at one end of said housing, an inner cavity within the housing, a pair of diametrically opposed cylindrical cavities within said housing, an end cover positioned over said opening and having an aperture therethrough, a shaft with an axis of rotation disposed within said aperture with one end of said shaft positioned within said housing, a splined surface on said shaft, a disc shaped rotor having a bore therethrough positioned concentrically around said shaft, a splined surface on the interior of said bore that engages said splined surface on said shaft, a pair of diametrically opposed stationary liners attached to said end cover and positioned between said end cover and said rotor, a piston disposed within each said cylindrical cavity in said housing, and an axially slidable piston side liner positioned between said rotor and each said piston, said rotor being axially slidable over said shaft and said pistons being biased to cause said piston side liners to force said rotor against said stationary liners to create a braking force.

9. The floating disc brake assembly of claim 8, further comprising a first bearing positioned concentrically around said shaft adjacent to said end cover, and a second bearing positioned concentrically around said shaft adjacent an said end of said shaft.

10. The floating disc brake assembly of claim 8 or claim 9, said splined surface on said shaft having an axial length greater than the width of said rotor such that said rotor may slide axially along said shaft while maintaining rotational engagement.

11. The floating disc brake assembly any one of claims 8 to 10, further comprising a back wall opposite said opening of said housing, and openings in said back wall providing access to said diametrically opposed cylindrical cavities.

12. The floating disc brake assembly of claim 11, further comprising an end cap removably positioned in each of said back wall openings of said cylindrical cavities.

13. The floating disc brake assembly of any one of claims 8 to 12, said piston side liners having a backing plate with a pair of ears, and said housing including a pair of depressions shaped to slidably receive said backing plates.

14. The floating disc brake assembly of any one of claims 8 to 13, each of said pistons having a neck extending through an aperture in said cylindrical cavity to engage said piston side liners.

15. A brake assembly for a disc which is axially moveable on a rotating shaft, the brake assembly comprising a housing with an end cover, a pair of pistons normally spaced from said end cover, the disc being positioned in the space between said end cover and said pistons, said pistons being moveable so that the disc is moved and engaged to provide a braking force to the shaft.
